(19) Europäisches Patentamt
European Patent Office
Office européen des brevets

(11) Veröffentlichungsnummer: **0 437 845 B1**

# (12) EUROPÄISCHE PATENTSCHRIFT

(45) Veröffentlichungstag der Patentschrift: **15.03.95**

(51) Int. Cl.6: **C08L 71/08**, C08L 67/00

(21) Anmeldenummer: **90125639.6**

(22) Anmeldetag: **28.12.90**

## (54) Witterungsbeständige Polymerlegierungen.

(30) Priorität: **16.01.90 DE 4001036**

(43) Veröffentlichungstag der Anmeldung:
**24.07.91 Patentblatt 91/30**

(45) Bekanntmachung des Hinweises auf die Patenterteilung:
**15.03.95 Patentblatt 95/11**

(84) Benannte Vertragsstaaten:
**AT BE CH DE DK ES FR GB GR IT LI LU NL SE**

(56) Entgegenhaltungen:
**EP-A- 0 113 112**
**EP-A- 0 349 648**
**EP-A- 0 365 917**

(73) Patentinhaber: **HOECHST AKTIENGESELLSCHAFT**
**D-65926 Frankfurt (DE)**

(72) Erfinder: **Brekner, Michael-Joachim, Dr.**
**Geisenheimer Strasse 90**
**W-6000 Frankfurt am Main (DE)**
Erfinder: **Drotloff, Hansotto, Dr.**
**Loreleistrasse 7**
**W-6230 Frankfurt am Main (DE)**
Erfinder: **Hermann-Schönherr, Otto, Dr.**
**Grafenstrasse 15**
**W-6140 Bensheim (DE)**
Erfinder: **Schneller, Arnold, Dr.**
**Asternweg 41**
**W-6500 Mainz (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 437 845 B1

## Beschreibung

Die Erfindung betrifft witterungsbeständige Polymerlegierungen, aus einem amorphen Polyaryletherketon und einem Polyarylester bestehend, und ihre Verwendung.

Transparente amorphe Thermoplasten finden zunehmend Anwendung in optischen Geräteteilen, in optischen Systemen der Leistungsoptik sowie in speziellen Optiken in Form von Linsen, Prismen, als Trägermaterialien für verschiedene optische Schichten, als transparentes Beschichtungsmaterial von Spiegeln, Linsen und Prismen sowie als Lichtwellenleiter. Der Vorteil von Thermoplasten ist ihre im Vergleich zu Glas relativ kostengünstige Verarbeitbarkeit und die für mobile Optiken besonders vorteilhafte geringe Dichte. Bei optischen Teilen aus Thermoplasten entfallen oft die kostenintensiven Oberflächenbehandlungen, da die Thermoplasten in polierte Formen gegossen oder gespritzt werden können. In diesem Zusammenhang sind amorphe transparente Polyaryletherketone aufgrund ihrer niedrigen Wasseraufnahme, ihrer hohen Transparenz, ihrer hohen Glastemperaturen und hohen Brechungsindizes bei gleichzeitig niedrigen Dichten von großem technischem Interesse.

Demgegenüber ist jedoch bekannt, daß Polyaryletherketone, vor allem aber amorphe Polyaryletherketone, keine zufriedenstellende UV-Stabilität und Witterungsbeständigkeit besitzen. Für optische Anwendungen von amorphen transparenten Polyaryletherketonen im Freien unter Einwirkung von Sonnenlicht und Wasser ist daher eine verbesserte Witterungsbeständigkeit erforderlich.

Es ist auch bekannt, daß amorphe Polyarylester (H.Domininghaus, Die Kunststoffe und ihre Eigenschaften, VDI Verlag, Zweite Auflage, 1986, Düsseldorf, Seite 535), gegen die Einwirkung von UV-Strahlen sehr beständig und somit gut für die Verwendung im Freien geeignet sind. Selbst ohne die Zugabe von Additiven ist bereits eine hohe Witterungsbeständigkeit gegeben. Diese Materialien vergilben im Freien praktisch nicht. Die Transparenz bleibt jedoch erhalten.

Polymere zu legieren, so daß die Komponenten auf molekularer Ebene homogen gemischt sind, ist nicht oder nur schwierig realisierbar. Durch ein solches Legieren können aber wichtige Eigenschaften verbessert oder gezielt eingestellt werden.

Die Eigenschaften einer homogen gemischten Legierung lassen sich aber aus den Eigenschaften der Einzelkomponenten nicht gesichert vorhersagen. Daher bleibt das Legieren von Polymeren weitgehend empirisch. Insbesondere ist die homogene Mischbarkeit von Legierungen, speziell solche aus stark wechselwirkenden Polymeren, trotz einer sehr großen Zahl von experimentellen und theoretischen Arbeiten auf diesem Gebiet, nicht vorhersagbar.

Es ist vielmehr bekannt, daß die überwiegende Mehrheit von Paaren von Polymeren nach dem Mischen zweiphasige Blends bilden und daß diese Mischungen durch Opazität, unterschiedliche thermische Übergänge (z.B. Glasübergänge) und schlechte mechanische Eigenschaften charakterisiert sind (vgl. Olabisi, Robeson, Shaw: Polymer - Polymer Miscibility, Academic Press, New York, S. 7, 1979).

Ein eindeutiges Kriterium für homogene Mischbarkeit ist das Auftreten einer einzigen Glastemperatur, die zwischen den Glastemperaturen der zur Herstellung der Mischung verwendeten Komponenten liegt. Die Transparenz von Folien von Polymerlegierungen ist ein Indiz, daß die Komponenten homogen gemischt vorliegen.

Aufgabe der vorliegenden Erfindung war es, transparente Legierungen auf Basis Polyaryletherketonen mit einer guten Witterungsstabilität bereitzustellen.

Es wurde gefunden, daß bestimmte amorphe Polyaryletherketone mit bestimmten amorphen Polyarylestern homogen mischbar und die erhaltenen Legierungen transparent und witterungsbeständiger sind als die amorphen Polyaryletherketone selbst.

Die Erfindung betrifft somit eine Legierung aus homogen gemischten Polymeren enthaltend:

a) mindestens ein amorphes Polyaryletherketon mit einem Staudingerindex von 0,2 bis 3 dl/g und

b) mindestens einen Polyarylester mit einem Staudingerindex von 0,1 bis 2 dl/g.

Außerdem betrifft die Erfindung die Verwendung einer Legierung zur Herstellung von Formkörpern, Spritzgußprodukten oder Extrusionsprodukten in Form von Fasern, Folien oder Schläuchen.

Die einzelnen Komponenten werden in folgenden Mengen eingesetzt:

(a) amorphes Polyaryletherketon: 2 bis 98, vorzugsweise 40 bis 98 und insbesondere 70 bis 98 Gew.-%;

(b) Polyarylester: 2 bis 98, vorzugsweise 2 bis 60 und insbesondere 2 bis 30 Gew.-%,

jeweils bezogen auf die Gesamtlegierung.

Die Polyaryletherketone a) sind aus Wiederholeinheiten der Formel (I) aufgebaut

-O-A-O-B- (I),

wobei A ausgewählt ist aus den Resten

$A^1$ 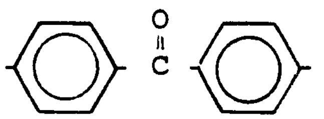 ,

$A^2$ 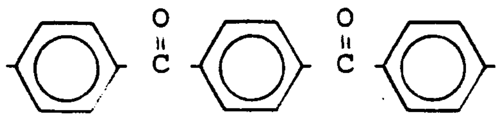 (m oder p) oder

$A^3$ 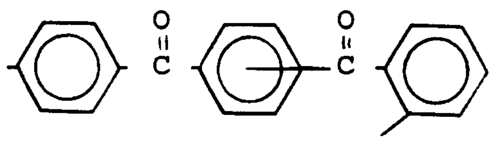 (m oder p)

und B ausgewählt ist aus den Resten

$B^1$ 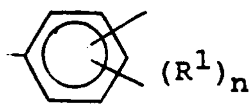 ,

$B^2$ 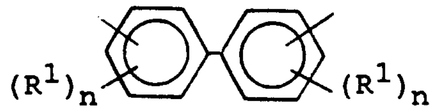 ,

$B^3$ 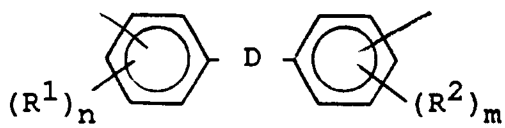 ,

$B^4$ 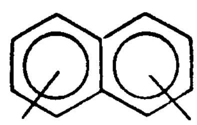 ,

$B^5$ 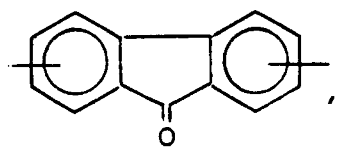 ,

$B^6$ 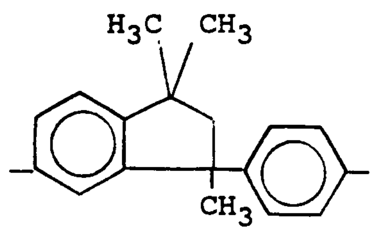 ,

$B^7$ 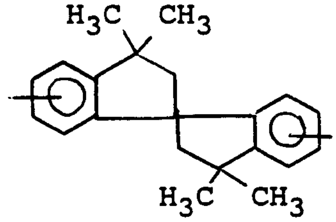 oder

$B^8$ 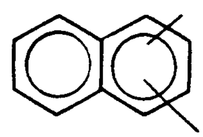

mit $R^1$ und $R^2$, die gleich oder verschieden sind und Halogen, vorzugsweise Brom, $C_1$-$C_8$-Alkyl oder -Alkoxy, vorzugsweise $C_1$-$C_4$-Alkyl oder -Alkoxy darstellen, m und n gleich oder verschieden sind und Null oder eine ganze Zahl von 1 bis 4, vorzugsweise Null, 1 oder 2, insbesondere Null oder 2, bedeuten. Stellen $R^1$ und $R^2$ in den Resten $B^2$ und $B^3$ Halogen dar, sind m und n vorzugsweise 2. D ist ausgewählt aus den zweiwertigen Resten

$D^1$ -O- , $D^2$ $>C = O$ ,

$D^3$ $-CH_2-$ , $D_4$ $-C(CH_3)_2-$ ,

$D^5$ $-C(CF_3)_2-$ ,

$D^7$ 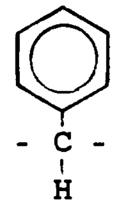 , $D^8$ 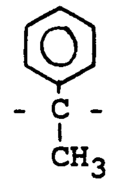 ,

$D^9$ 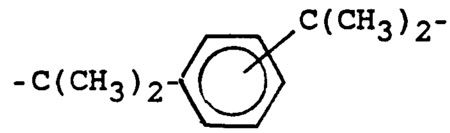 (m oder p),

$D^{10}$ 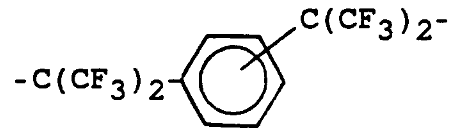 (m oder p)

oder

$D^{11}$ $-SO_2-$ ,

wobei das molare Verhältnis der Einheiten A und B 0,95 bis 1,05 zu 1,0, vorzugsweise 1:1, beträgt.

Die aufgeführten Polymere können Homopolymere sein, die nur eine Einheit vom Typ A und eine Einheit vom Typ B je wiederkehrende Einheit enthalten, oder Copolykondensate, welche zwei oder mehrere verschiedene Einheiten vom Typ A und/oder zwei oder mehrere verschiedenen Einheiten vom Typ B enthalten.

A ist vorzugsweise $A^1$ oder $A^2$ und insbesondere $A^2$. B ist vorzugsweise $B^1$, $B^2$, $B^3$, insbesondere $B^3$. D ist vorzugsweise $D^2$, $D^3$, $D^4$, $D^5$, $D^6$, $D^7$, $D^8$ oder $D^{11}$, sowie $D^9$ oder $D^{10}$, die in para-Stellung verknüpft sind. Besonders bevorzugt sind $D^4$, $D^5$, $D^8$ oder $D^{10}$.

Ist A $A^1$ oder $A^2$, so ist B nicht $B^4$. Wenn B gleich $B^3$ und n gleich Null ist, dann ist D nicht $D^1$ oder $D^2$.

Ist in der Struktureinheit (I) A gleich $A^3$, so ist B bevorzugt $B^1$ oder $B^2$ mit n gleich Null, 1 oder 2, insbesondere gleich Null.

In Copolyetherketonen sind 0 bis 50 Mol-% Einheiten $A^2$ und 50 bis 0 Mol-% Einheiten $A^3$, vorzugsweise 5 bis 30 Mol-% $A^2$ und 45 bis 20 Mol-% $A^3$, in Gegenwart von $B^1$, $B^2$ oder $B^4$ enthalten.

Der Rest A kann in Copolyetherketonen auch $A^1$, $A^2$ oder $A^3$ sein und der Rest B 0 bis 50 Mol-%, vorzugsweise 5 bis 20 Mol-%, insbesondere 5 bis 10 Mol-% Einheiten $B^1$ und 50 bis 0 Mol%, vorzugsweise 45 bis 30 Mol-%, insbesondere 45 bis 40 Mol-% Einheiten, ausgewählt aus $B^2$, $B^3$ oder $B^4$, enthalten.

Die amorphen Polyaryletherketone haben Staudingerindizes, gemessen bei 25 °C in Chloroform, N-Methylpyrrolidon oder N,N-Dimethylacetamid, von 0,2 bis 3, vorzugsweise von 0,3 bis 1,0 und insbesondere von 0,3 bis 0,6 dl/g.

Die Polyarylester b) sind Polyestercarbonate, vorzugsweise Copolyester, die Carbonatgruppen, Carboxylatgruppen und aromatische Gruppen enthalten, wobei mindestens eine der Carboxylgruppen und mindestens eine der Carbonatgruppen direkt mit den Ring-Kohlenstoffatomen der aromatischen Gruppen verbunden sind. Diese Polymere werden durch Reaktion von aromatischen Carbonsäuren mit Dihydroxyphenolen und Carbonat-Precursoren hergestellt. Es können auch reaktive Derivate aromatischer Dicarbonsäuren wie Terephthalsäuredichlorid, Isophthalsäuredichlorid oder Mischungen dieser beiden eingesetzt werden.

Die Dihydroxyphenole, die zur Synthese von geeigneten Polyestercarbonaten verwendet werden, besitzen die allgemeine Formel

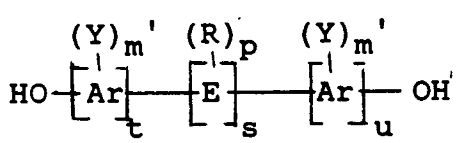

wobei Ar eine aromatische Gruppe bedeutet, wie Phenylen, Bisphenylen oder Naphthylen und E Alkylen oder Alkyliden, wie Methylen, Ethylen oder Isopropyliden ist. E kann auch aus zwei oder mehreren Alkylen- oder Alkyliden-Gruppen bestehen, verbunden durch eine aromatische Gruppe, eine Carbonylgruppe, eine Sulfidgruppe, eine Sulfoxidgruppe, eine Sulfongruppe oder eine Ethergruppe. Auch kann E eine cycloaliphatische Gruppe, eine Sulfidgruppe, eine Sulfoxidgruppe, eine Sulfongruppe, eine Etherbindung oder eine Carbonylgruppe sein.

R ist Wasserstoff, $C_1$-$C_6$-Alkyl, $C_6$-$C_{12}$-Aryl oder ein cycloaliphatischer Rest. Y hat die Bedeutung von R oder ist ein Halogen oder eine Nitrogruppe. S, t und u sind unabhängig voneinander Null oder 1, m' und p sind unabhängig voneinander Null oder eine ganze Zahl, die höchstens so groß ist wie die maximal mögliche Zahl der Substituenten, die A oder E tragen können.

Wenn mehrere der mit Y bezeichneten Substituenten vorhanden sind, dann können diese gleich oder verschieden sein. Dasselbe gilt für R. Die Hydroxylgruppen und Y können in para-, meta- oder ortho-Stellung an den aromatischen Rest gebunden sein.

Bevorzugte Dihydroxyphenole zur Herstellung der Polyarylester b) sind solche der Formel (II)

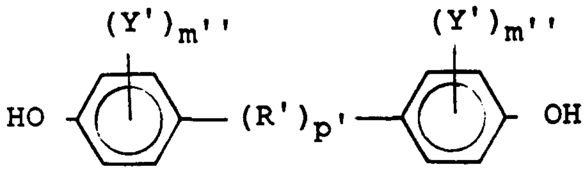

(II),

in der Y' $C_1$-$C_4$-Alkyl, $C_6$-$C_{12}$-Cycloalkyl oder Halogen, vorzugsweise Cl oder F, bedeutet. Jedes m'' ist unabhängig voneinander Null, 1, 2, 3 oder 4, vorzugsweise Null, R' ist $C_1$-$C_8$-Alkylen, $C_1$-$C_8$-Alkyliden, oder $C_6$-$C_{20}$-Arylen, vorzugsweise $C_6$-$C_{12}$-Arylen, insbesondere $C_3$-Alkyliden und p' ist Null oder 1.

Die Dihydroxyphenole können allein oder als Mischungen mindestens zweier Dihydroxyphenole verwendet werden.

Aromatische Dicarbonsäuren zur Synthese geeigneter Polyarylester a) besitzen die allgemeine Formel (III)

HOOC - R'' - COOH (III),

wobei R'' ausgewählt ist aus den Gruppen

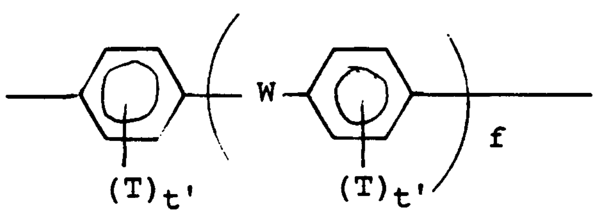

oder

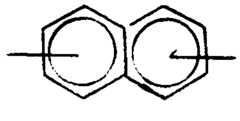

oder

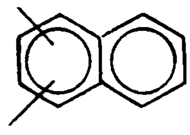

,

wobei f Null oder 1 ist und W für O, $SO_2$, CO, $C(CH_3)_2$, $CH_2$, S oder

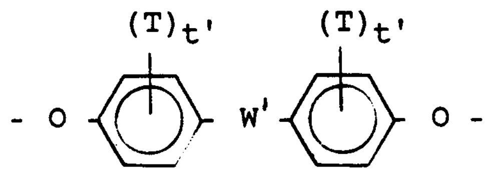

steht, wobei W' die oben für W angegebene Bedeutung hat.

T ist $C_1$-$C_6$-Alkyl, vorzugsweise Methyl, Propyl, Butyl oder Halogen, vorzugsweise F, Cl oder Br und t' ist Null oder eine ganze Zahl 1, 2, 3 oder 4.

Bevorzugte aromatische Dicarbonsäuren sind Isophthalsäure, Terephthalsäure oder Mischungen dieser beiden.

Zur Synthese der Polyestercarbonate verwendbare Carbonat-Precursoren sind Carbonylhalogenide, beispielsweise Carbonylchlorid, Carbonylbromid oder Phosgen und Carbonatester, beispielsweise Diphenylcarbonat.

Die Legierungen können außerdem Polyarylester enthalten, die abgeleitet sind von mindestens einem der oben beschriebenen Dihydroxyphenole und mindestens einer der oben beschriebenen aromatischen Dicarbonsäuren oder deren reaktiven Derivate.

Diese Polyarylester werden beispielsweise durch Reaktion von Säurechloriden mit Dihydroxyphenolen oder durch Reaktion von Dicarbonsäuren mit Diesterderivaten von Dihydroxyphenolen oder durch Reaktion von Dihydroxyphenolen mit Dicarbonsäuren und Diarylcarbonaten hergestellt.

Das Polyestercarbonat kann ein Copolymeres aus Bisphenol A, Terephthalsäuredichlorid, Isophthalsäuredichlorid oder Mischungen dieser beiden und Phosgen sein. Das Copolymere kann aber auch aus Bisphenol A, Terephthalsäure, Isophthalsäure oder Mischungen dieser beiden hergestellt werden.

Die Staudingerindizes der verwendeten Polyarylester bzw. Polyestercarbonate liegen im Bereich von 0,1 bis 2, bevorzugt von 0,2 bis 1,5 und insbesondere von 0,3 bis 0,8, gemessen bei 25 °C in p-Chlorphenol, Methylenchlorid, N,N-Dimethylformamid oder N-Methylpyrrolidon.

Der Begriff Polyarylester, wie er hier verwendet wird, schließt Homopolymere, Copolymere, Terpolymere und Blockcopolymere ein.

Die Legierungen werden durch bekannte Legierungsmethoden hergestellt. Beispielsweise werden die Legierungspartner in Form von Pulver oder Granulat gemeinsam in einem Extruder zu Strängen extrudiert und diese zu Granulat zerkleinert und in die gewünschte Form, beispielsweise durch Pressen oder Spritzgießen, gebracht.

Die Legierungen werden zur Herstellung von Formkörpern, Spritzgußprodukten oder Extrusionsprodukten in Form von Fasern, Folien oder Schläuchen verwendet.

Die Legierungen können Additive enthalten, beispielsweise Plastifizierer, thermische Stabilisatoren, Schlagzähmodifizierer oder verstärkende Zusätze, wie Glas-, Kohle- oder Hochmodulfasern.

## Beispiele

Die folgenden Polymere wurden nach Standardmethoden synthetisiert, deren Molekulargewichte mittels Hochtemperatur-Gelpermeationschromatographie (Meßbedingungen: 80 °C, N,N-Dimethylformamid mit 0,06 Gew.-% LiBr, 3 Ultrastyragel linear und 1 Mikrostyragel 100 A, Polystyrolstandard) und/oder über Messungen der Staudingerindizes bestimmt wurden.

Die Vergleichsversuche wurden mit einem Polyethersulfon anstatt eines Polyetherketons durchgeführt.

Polyaryletherketon I (Staudingerindex: 0,7 dl/g, gemessen in Chloroform bei 25 °C; GPC: Mw = 65.000 g/mol, Mn = 34.000 g/mol, Mw/Mn = 1,95 ) mit Wiederholeinheiten der folgenden Formel:

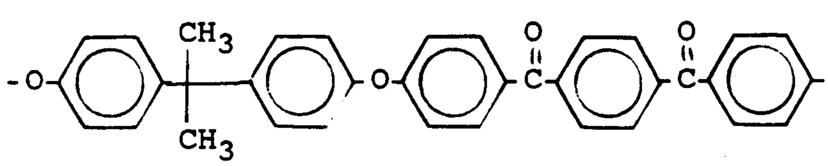

Polyaryletherketon II (Staudingerindex: 0,4 dl/g, gemessen in Chloroform bei 25 ° C) mit Wiederholeinheiten der oben angegebenen Formel für das Polyaryletherketon I.

Polyaryletherketon III (Staudingerindex: 0,5 dl/g, gemessen in Chloroform bei 25 ° C) mit Wiederholeinheiten der folgenden Formel:

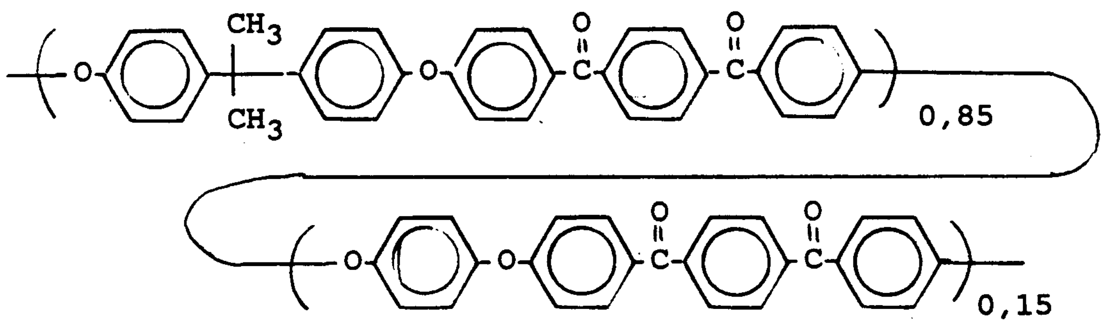

Polyarylester I (Staudingerindex: 0,5 dl/g, gemessen in Methylenchlorid bei 25 ° C; GPC: Mw = 48.000 g/mol, Mn = 22.000 g/mol, Mw/Mn = 2,1) mit Wiederholeinheiten der folgenden Formel

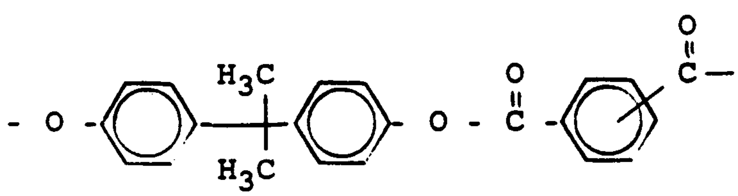

Polyarylester II (Staudingerindex: 0,7 dl/g, gemessen in p-Chlorphenol bei 25 ° C; GPC: Mw = 61.000 g/mol, Mn = 29.000 g/mol, Mw/Mn = 2,1) mit Wiederholeinheiten der folgenden Formel:

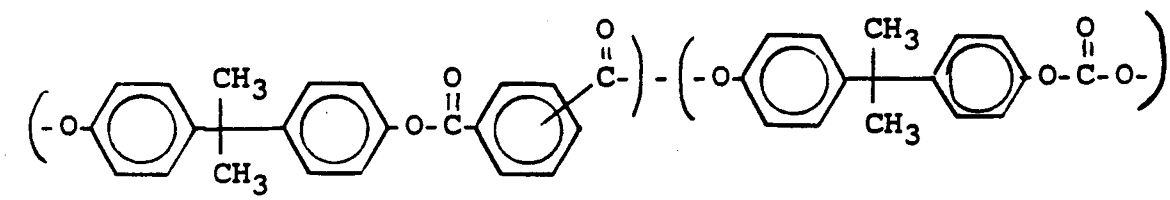

Polyethersulfon I (GPC: Mw = 73.000 g/mol; Mn = 39.000 g/mol; Mw/Mn = 1,9) mit Wiederholeinheiten der folgenden Formel:

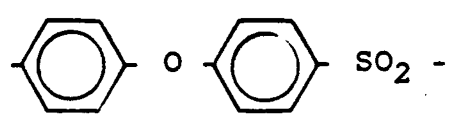

Die aufgeführten Polymere wurden zunächst getrocknet (120 ° C, 24 h, verminderter Druck) und anschließend in unterschiedlichen Gewichtsverhältnissen in einem Meßkneter (Fa. HAAKE, ®Rheocord System 90/Rheomix 600, Karlsruhe, Bundesrepublik Deutschland) unter Inertgas gemeinsam geknetet. Als Inertgas wurde vorzugsweise Argon eingesetzt. Die erhaltenen Legierungen wurden anschließend getrocknet (120 ° C, 24 h, verminderter Druck). Zur Bestimmung der physikalischen Eigenschaften der Legierungen wurden folgende Geräte verwendet: ein Torsionsautomat der Firma Brabender, Offenbach, Bundesrepublik Deutschland; ein Differentialkalorimeter DSC 7 der Fa. Perkin Elmer, Überlingen, Bundesrepublik Deutschland.

Die Bestimmung der Witterungsbeständigkeit wurde im ®Xenotest-Gerät der Fa. Heraeus, Hanau, Bundesrepublik Deutschland durchgeführt (500 h nach DIN 53 387).

**Beispiel 1**

Es wurden 30 g Polyaryletherketon I (DSC: Glastemperatur = 160 °C) mit 30 g Polyarylester II (DSC: Glastemperatur = 188 °C) im Meßkneter bei einer Temperatur von 300 °C bei einer Drehzahl von 100 U/min für 30 min gemeinsam unter Inertgas (Ar) geknetet. Die resultierende Legierung ist transparent und weist eine einzige Glastemperatur von 165 °C auf (DSC). Die eingesetzten Komponenten waren daher homogen mischbar.

**Beispiel 2**

Es wurden 30 g Polyaryletherketon III (DSC: Glastemperatur 155 °C) mit 30 g Polyarylester I (DSC: Glastemperatur 190 °C) unter den in Beispiel 1 angegebenen Bedingungen geknetet. Die resultierende Legierung war transparent und wies nach DSC-Untersuchungen eine einzige Glastemperatur von 163 °C auf. Die eingesetzten Komponenten waren daher homogen mischbar.

**Beispiel 3**

Es wurden unter den in Beispiel 1 angegebenen Bedingungen in unterschiedlichen Gewichtsverhältnissen Polyarylester I und die Polyaryletherketone I bzw. II gemeinsam geknetet. Die Tab. 1 und 2 zeigen, daß das Mischbarkeitsverhalten vom Molekulargewicht der Komponenten abhängt.

**Tabelle 1:**

Vergleichsbeispiel C

| Gew.-% Polyaryletherketon I | Gew.-% Polyarylester I | Transparenz | Glastemperatur * |
|---|---|---|---|
| 50 | 50 | nein | 162°C / 180°C |

*: mittels DSC bestimmt

**Tabelle 2:**

| Gew.-% Polyaryletherketon II | Gew.-% Polyarylester I | Transparenz | Glastemperatur ** |
|---|---|---|---|
| 50 | 50 | ja | 153°C |
| 80 | 20 | ja | 150°C |
| 90 | 10 | ja | 148°C |
| 100 | 0 | ja | 148°C |
| 0 | 100 | ja | 185°C |

**: mittels Torsionsautomat an gepreßten Platten (300°C, 200 bar) bestimmt

**Vergleichsbeispiel A**

Es wurden im Meßkneter a) Polyethersulfon I mit Polyarylester I und b) Polyethersulfon I mit Polyarylester II in verschiedenen Gewichtsverhältnissen unter den in Beispiel 1 angegebenen Bedingungen gemeinsam geknetet. Die Tabellen 3 und 4 zeigen, daß die verwendeten Komponenten nicht homogen

mischbar waren, da die resultierenden Legierungen nicht transparent waren und zwei Glastemperaturen aufwiesen.

**Tabelle 3:**

| Gew.-% Polyethersulfon I | Gew.-% Polyarylester I | Transparenz | Glastemperatur (DSC) |
|---|---|---|---|
| 100 | 0 | ja | 225°C |
| 50 | 50 | nein | 225°C / 190°C |
| 80 | 20 | nein | 225°C / 190°C |

**Tabelle 4:**

| Gew.-% Polyethersulfon I | Gew.% Polyarylester II | Transparenz | Glastemperatur (DSC) |
|---|---|---|---|
| 50 | 50 | nein | 225°C / 188°C |
| 80 | 20 | nein | 225°C / 188°C |

**Vergleichsbeispiel B**

Es wurden 1 mm dicke Platten von Polyaryletherketon II und Polyethersulfon I gepreßt (300 ° C, 100 bar) und Bewitterungstests durchgeführt. Sowohl das Polyaryletherketon als auch das Polyethersulfon waren nach der Bewitterung nicht mehr transparent. Die Platten waren mit einem durch leichtes Kratzen zu entfernenden, trüben Belag bedeckt.

**Beispiel 4**

Es wurden Platten gepreßt (300 ° C, 100 bar) von den in Beispiel 1 und in Beispiel 3, Tab. 2 beschriebenen Legierungen und diese bewittert. Nach der Bewitterung waren diese Platten transparent, und ein wie in Vergleichsbeispiel B beschriebener Belag war nicht zu beobachten.

**Patentansprüche**

**1.** Legierung aus homogen gemischten Polymeren, die nur eine einzige Glastemperatur aufweisen, enthaltend:
   a) mindestens ein amorphes Polyaryletherketon mit einem Staudingerindex von 0,2 bis 3 dl/g und
   b) mindestens einen Polyarylester mit einem Staudingerindex von 0,1 bis 2 dl/g.

**2.** Legierung nach Anspruch 1, dadurch gekennzeichnet, daß die Komponenten in den Mengenverhältnissen vorliegen:
   a) Polyaryletherketone: 2 bis 98 Gew.-% und
   b) Polyarylester: 2 bis 98 Gew.-%,
   jeweils bezogen auf die Gesamtlegierung.

**3.** Legierung nach Anspruch 1 oder 2, dadurch gekennzeichnet, daß das Polyaryletherketon aus mindestens einer Struktureinheit der Formel (I) aufgebaut ist

-O-A-O-B- (I),

wobei A ausgewählt ist aus den Resten

$A^1$ 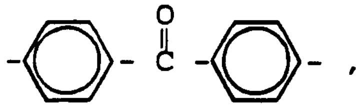 ,

$A^2$ 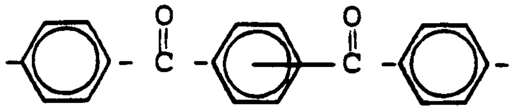 (m oder p) oder

$A^3$ 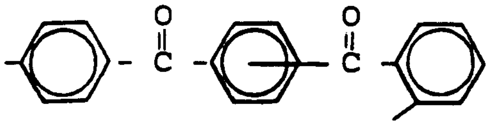 (m oder p)

und B ausgewählt ist aus den Resten

$B^1$ 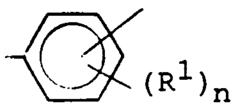 ,

$B^2$ 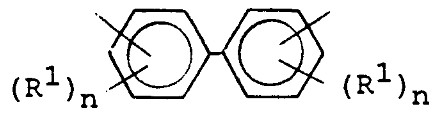 ,

$B^3$ 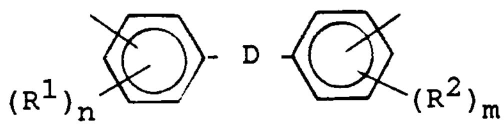 ,

$B^4$ 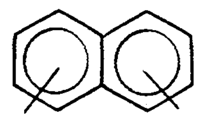 ,

$B^5$ 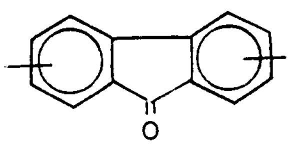 ,

$B^6$ 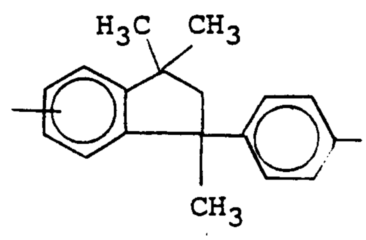

$B^7$ 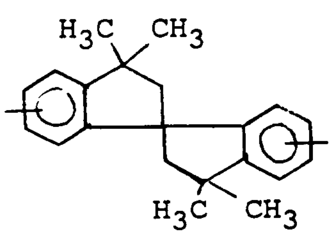 oder

$B^8$ 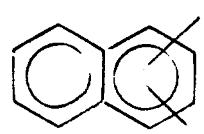

mit $R^1$ und $R^2$, die gleich oder verschieden sind und Halogen, $C_1$-$C_8$-Alkyl oder -Alkoxy darstellen, m und n gleich oder verschieden sind und Null oder eine ganze Zahl von 1 bis 4 bedeuten und D ausgewählt ist aus den zweiwertigen Resten

$D^1$ -O- , $D^2$ $>C = 0$ ,

$D^3$ $-CH_2-$ , $D_4$ $-C(CH_3)_2-$ ,

$D^5$ $-C(CF_3)_2-$ ,

$D^7$ 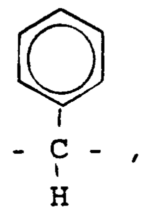 , $D^8$ 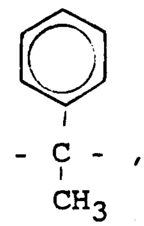 ,

$D^9$ 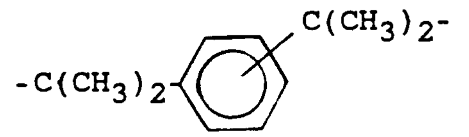 (m oder p),

$D^{10}$ 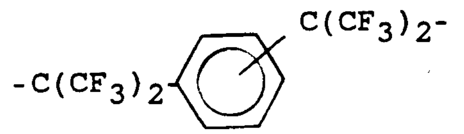 (m oder p)

oder
$D^{11}$ $-SO_2-$ ,
wobei das molare Verhältnis der Einheiten A und B 0,95 bis 1,05 zu 1,0 beträgt.

**4.** Legierung nach Anspruch 3, dadurch gekennzeichnet, daß $R^1$ und $R^2$ Brom, $C_1$-$C_4$-Alkyl oder -Alkoxy und m und n Null, 1 oder 2 darstellen und das molare Verhältnis der Einheiten A zu B 1:1 ist.

**5.** Legierung nach einem oder mehreren der Ansprüche 1 bis 4, dadurch gekennzeichnet, daß Homo- oder Copolykondensate der Polyaryletherketone eingesetzt werden.

**6.** Legierung nach Anspruch 5, dadurch gekennzeichnet, daß in Copolykondensaten 0 - 50 Mol-% Einheiten $A^2$ und 50 - 0 Mol-% Einheiten $A^3$ in Gegenwart von $B^1$, $B^2$ oder $B^4$ in den Polyetherketonen enthalten sind.

**7.** Legierung nach Anspruch 5, dadurch gekennzeichnet, daß in Copolykondensaten der Rest A ausgewählt ist aus $A^1$, $A^2$ oder $A^3$ und im Rest B 0-50 Mol-% Einheiten $B^1$ und 50-0 Mol-% Einheiten ausgewählt aus $B^2$, $B^3$, $B^4$, enthalten sind.

**8.** Legierung nach einem oder mehreren der Ansprüche 1 bis 5, dadurch gekennzeichnet, daß der Polyarylester b) ein Polyestercarbonat ist, das sich von mindestens einem Dihydroxyphenol, einem Carbonat-Precursor und mindestens einer aromatischen Dicarbonsäure oder eines reaktiven Derivates der Dicarbonsäure ableitet.

**9.** Legierung nach Anspruch 8, dadurch gekennzeichnet, daß das Dihydroxyphenol folgende Formel (II) aufweist

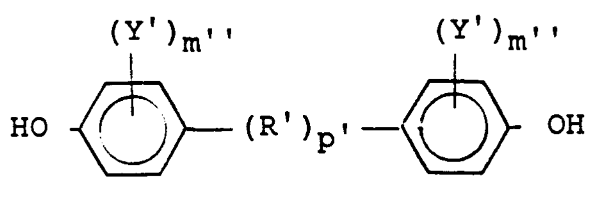 (II),

in der Y' $C_1$-$C_4$-Alkyl, $C_6$-$C_{12}$-Cycloalkyl oder Halogen bedeutet, m'' unabhängig voneinander Null, 1, 2, 3 oder 4, R' $C_1$-$C_8$-Alkylen, $C_1$-$C_8$-Alkyliden oder $C_6$-$C_{20}$-Arylen, darstellen und p' Null oder 1 ist.

**10.** Legierung nach Anspruch 8, dadurch gekennzeichnet, daß die aromatische Dicarbonsäure die Formel (III) aufweist

HOOC - R" - COOH (III),

wobei R" ausgewählt ist aus den Gruppen

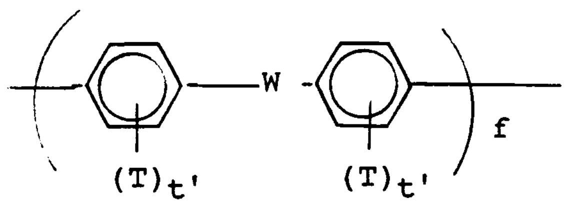

oder 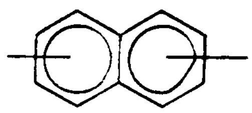

oder 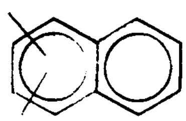 ,

wobei f Null oder 1 ist und W für O, $SO_2$, CO, $C(CH_3)_2$, $CH_2$, S, oder

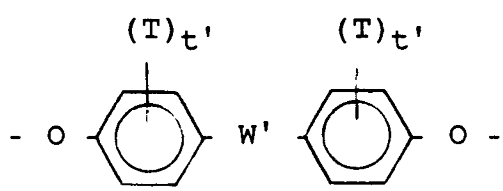

steht, wobei W' die oben für W angegebene Bedeutung hat, und T in den Formeln $C_1$-$C_6$-Alkyl ist und t' Null oder 1, 2, 3 oder 4 ist.

**11.** Legierung nach einem oder mehreren der Ansprüche 8 bis 10, dadurch gekennzeichnet, daß das Polyestercarbonat ein Copolymeres aus Bisphenol A, Terephthalsäuredichlorid, Isophthalsäuredichlorid oder Mischungen dieser beiden und Phosgen ist.

**12.** Legierung nach einem oder mehreren der Ansprüche 8 bis 10, dadurch gekennzeichnet, daß das Dihydroxyphenol Bisphenol A ist, und die aromatischen Dicarbonsäuren Terephthalsäure oder Isophthalsäure oder Mischungen dieser beiden sind.

**13.** Verwendung einer Legierung nach einem oder mehreren der Ansprüche 1 bis 12 zur Herstellung von Formkörpern, spritzgußprodukten oder Extrusionsprodukten in Form von Fasern, Folien oder Schläuchen.

## Claims

**1.** An alloy comprising homogeneously mixed polymers which have only one single glass-transition temperature, and containing:

a) at least one amorphous polyaryl ether ketone having a Staudinger index of from 0.2 to 3 dl/g and

b) at least one polyaryl ester having a Staudinger index of from 0.1 to 2 dl/g.

**2.** An alloy as claimed in claim 1, wherein the components are present in the mixing ratios:
a) polyaryl ether ketones: 2 to 98% by weight and
b) polyaryl esters: 2 to 98% by weight,
in each case based on the total alloy.

**3.** An alloy as claimed in claim 1 or 2, wherein the polyaryl ether ketone is built up from at least one structural unit of the formula (I)

-O-A-O-B (I),

where A is selected from the radicals

$A^1$ 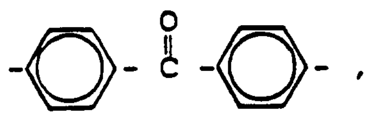

$A^2$ 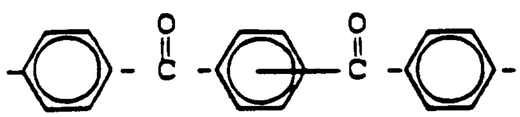 (m or p) or

$A^3$ 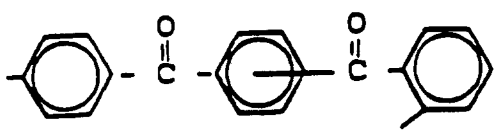 (m or p)

and B is selected from the radicals

B¹ 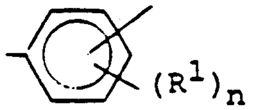 ,

B² 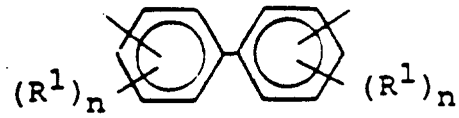 ,

B³ 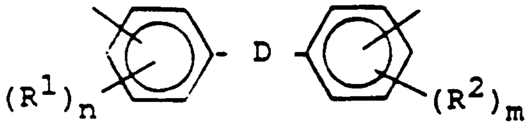 , B⁴ 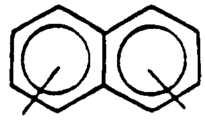 ,

B⁵ 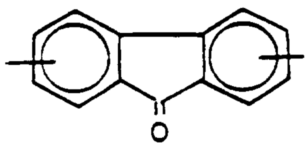 ,

B⁶ 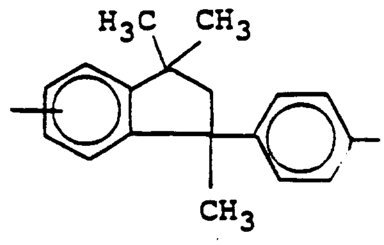

B⁷ 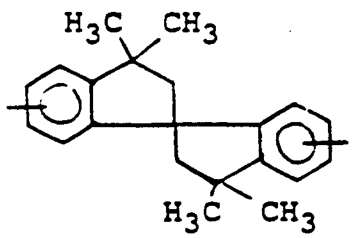 or B⁸ 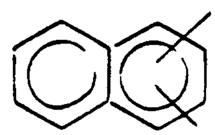

where $R^1$ and $R^2$, which are identical or different, are halogen, $C_1$-$C_8$-alkyl or -alkoxy, m and n are identical or different and are zero or an integer from 1 to 4, and D is selected from the divalent radicals
$D^1$ -O- , $D^2$ $>C=O$ ,
$D^3$ $-CH_2-$ , $D_4$ $-C(CH_3)_2-$ ,
$D^5$ $-C(CF_3)_2-$ ,

$D^7$ 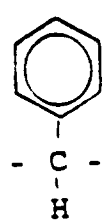 , $D^8$ 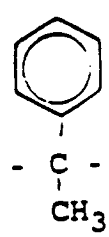 ,

$D^9$ 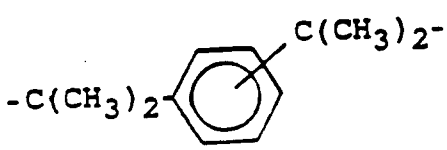 (m or p),

$D^{10}$ 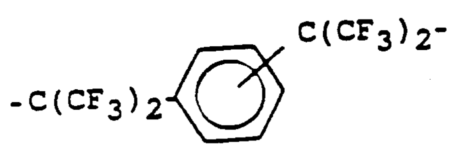 (m or p)

or
$D^{11}$ -$SO_2$- ,
the molar ratio between the units A and B being from 0.95 to 1.05:1.0.

**4.** An alloy as claimed in claim 3, wherein $R^1$ and $R^2$ are bromine, $C_1$-$C_4$-alkyl or -alkoxy, and m and n are zero, 1 or 2, and the molar ratio between the units A and B is 1:1.

**5.** An alloy as claimed in one or more of claims 1 to 4, wherein a homopolycondensate or copolycondensate of the polyaryl ether ketone is employed.

**6.** An alloy as claimed in claim 5, wherein, in copolycondensates, the polyether ketones contain from 0 to 50 mol-% of units $A^2$ and from 50 to 0 mol-% of units $A^3$ in the presence of $B^1$, $B^2$ or $B^4$.

**7.** An alloy as claimed in claim 5, wherein, in copolycondensates, the radical A is selected from $A^1$, $A^2$ and $A^3$, and the radical B contains from 0 to 50 mol-% of units $B^1$ and from 50 to 0 mol-% of units selected from $B^2$, $B^3$ and $B^4$.

**8.** An alloy as claimed in one or more of claims 1 to 5, wherein the polyaryl ester b) is a polyester carbonate derived from at least one dihydroxyphenol, a carbonate precursor and at least one aromatic dicarboxylic acid or a reactive derivative thereof.

**9.** An alloy as claimed in claim 8, wherein the dihydroxyphenol has the following formula (II)

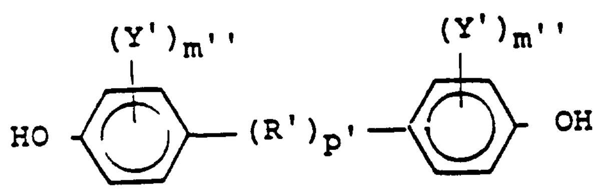

(II)

in which Y' is $C_1$-$C_4$-alkyl, $C_6$-$C_{12}$-cycloalkyl or halogen, m'', independently of one another, is zero, 1, 2, 3 or 4, R' is $C_1$-$C_8$-alkylene, $C_1$-$C_8$-alkylidene or $C_6$-$C_{20}$-arylene, and p' is zero or 1.

**10.** An alloy as claimed in claim 8, wherein the aromatic dicarboxylic acid has the formula (III)

HOOC - R'' - COOH (III),

where R'' is selected from the groups

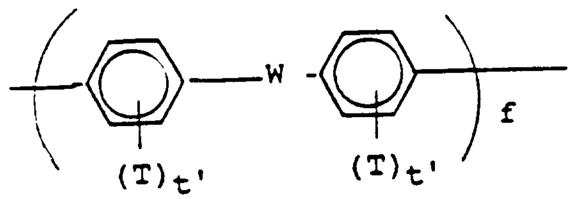

or

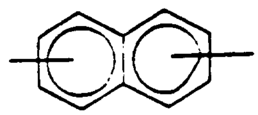

or

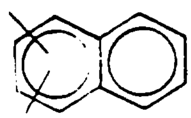

,

where f is zero or 1, and W is O, $SO_2$, CO, $C(CH_3)_2$, $CH_2$, S or

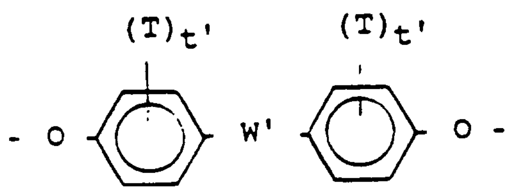

where W' is as defined above for W, and T in the formulae is $C_1$-$C_6$-alkyl and t' is zero, 1, 2, 3 or 4.

**11.** An alloy as claimed in one or more of claims 8 to 10, wherein the polyester carbonate is a copolymer of bisphenol A, terephthaloyl dichloride, isophthaloyl dichloride or a mixture of the two and phosgene.

**12.** An alloy as claimed in one or more of claims 8 to 10, wherein the dihydroxyphenol is bisphenol A, and the aromatic dicarboxylic acid is terephthalic acid or isophthalic acid or a mixture of the two.

**13.** The use of an alloy as claimed in one or more of claims 1 to 12 for the production of moldings, injection-molded products or extruded products in the form of fibres, films or tubes.

**Revendications**

**1.** Alliage constitue de polymères en mélange homogène, comportant une température de transition vitreuse unique, comprenant :

a) au moins une polyaryléthercétone amorphe ayant un indice de Staudinger de 0,2 à 3 dl/g, et

b) au moins un polyarylester ayant un indice de Staudinger de 0,1 à 2 dl/g.

**2.** Alliage selon la revendication 1, caractérisé en ce que les constituants sont présents selon les proportions pondérales suivantes :

a) Polyaryléthercétones : 2 à 98 % en poids, et

b) Polyarylesters : 2 à 98 % en poids,

dans chaque cas par rapport à la totalité de l'alliage.

**3.** Alliage selon la revendication 1 ou 2, caractérisé en ce que la polyaryléthercétone est constituée d'au moins un motif structural de formule (I)

-O-A-O-B (I)

dans laquelle A est choisi parmi les radicaux

$A^1$ 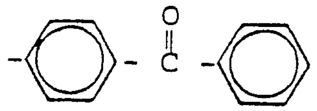 ,

$A^2$ 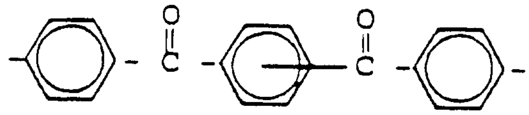 (m ou p), ou

$A^3$ 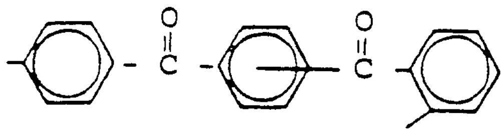 (m ou p)

et B est choisi parmi les radicaux

$B^1$ 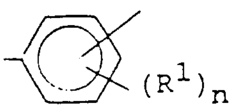 ,

$B^2$ 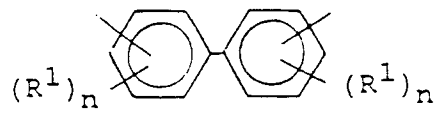 ,

$B^3$ 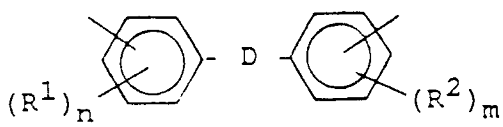 ,

$B^4$ 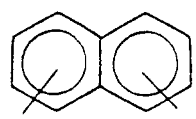 ,

$B^5$ 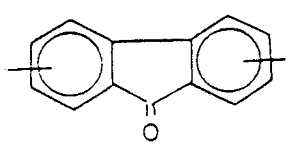 ,

$B^6$ 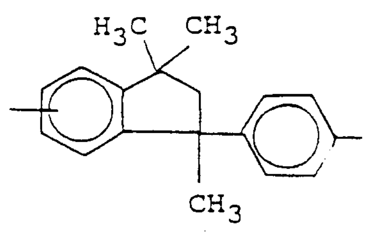

$B^7$ 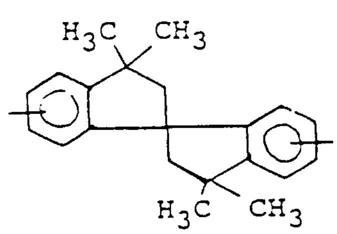 ou

$B^8$ 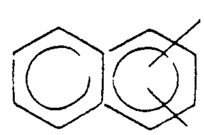

où $R^1$ et $R^2$, qui sont identiques ou différents, sont des halogènes ou des radicaux alkyle ou alcoxy en $C_1$-$C_8$, m et n sont égaux ou différents, et valent 0 ou un nombre entier de 1 à 4, et D est choisi parmi les radicaux divalents :

$D^1$ -O- , $D^2$ $>C = 0$ ,

$D^3$ $-CH_2-$ , $D_4$ $-C(CH_3)_2-$ ,
$D^5$ $-C(CF_3)_2-$ ,

$D^7$ 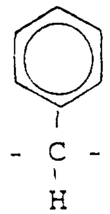 ,      $D^8$ 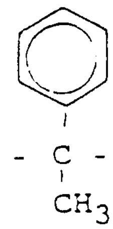 ,

$D^9$ 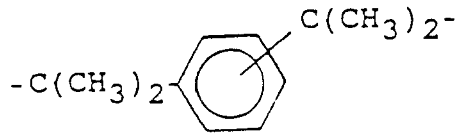 (m ou p),

$D^{10}$ 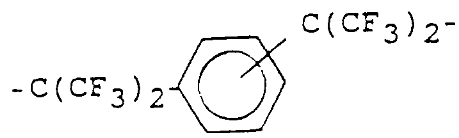 (m ou p),

ou
$D^{11}$ $-SO_2-$ ,
le rapport en moles des motifs A et B étant de 0,95 à 1,05:1,0.

**4.** Alliage selon la revendication 3, caractérisé en ce que $R^1$ et $R^2$ sont chacun un radical bromo ou alkyle ou alcoxy en $C_1$-$C_4$, et m et n valent 0, 1 ou 2, le rapport en moles des motifs A aux motifs B étant de 1:1.

**5.** Alliage selon l'une des revendications 1 à 4, caractérisé en ce qu'on utilise des produits homo- ou de copolycondensation des polyaryléthercétones.

**6.** Alliage selon la revendication 5, caractérisé en ce que les produits de copolycondensation contiennent de 0 à 50 % en moles de motifs $A^2$ et de 50 à 0 % en moles de motifs $A^3$ en présence de $B^1$, $B^2$ ou $B^4$ dans les polyéthercétones.

**7.** Alliage selon la revendication 5, caractérisé en ce que, dans les produits de copolycondensation, le radical A est choisi parmi $A^1$, $A^2$ ou $A^3$, et le radical B contient de 0 à 50 % en moles de motifs $B^1$ et de 50 à 0 % en moles de motifs choisis parmi $B^2$, $B^3$ et $B^4$.

**8.** Alliage selon l'une ou plusieurs des revendications 1 à 5, caractérisé en ce que le polyarylester B est un polyestercarbonate, qui dérive d'au moins un dihydroxyphénol, d'un précurseur de carbonate et d'au moins un acide dicarboxylique aromatique ou d'un dérivé réactif de l'acide dicarboxylique.

**9.** Alliage selon la revendication 8, caractérisé en ce que le dihydroxyphénol a la formule suivante (II)

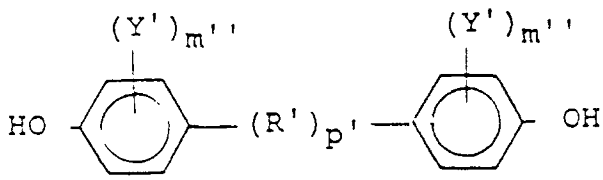

(II),

dans laquelle Y' est un radical alkyle en $C_1$-$C_4$, cycloalkyle en $C_1$-$C_{12}$ ou halogéno, les indices m'', indépendamment l'un de l'autre, valent chacun 0 ou 1, 2, 3 ou 4, R' est un radical alkylène en $C_1$-$C_8$, alkylidène en $C_1$-$C_8$ ou arylène en $C_6$-$C_{20}$, et p' vaut 0 ou 1.

**10.** Alliage selon la revendication 8, caractérisé en ce que l'acide dicarboxylique aromatique a la formule (III)

HOOC - R'' - COOH (III)

où R'' est choisi parmi les groupes

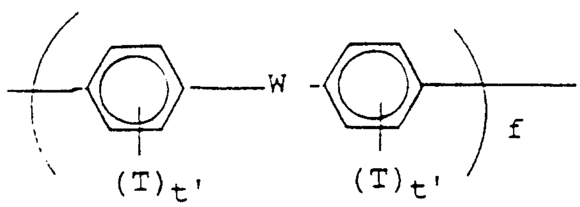

ou

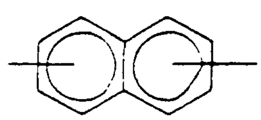

ou

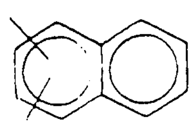

,

où f vaut 0 ou 1, et W correspond à O, $SO_2$, CO, $C(CH_3)_2$, $CH_2$, S ou

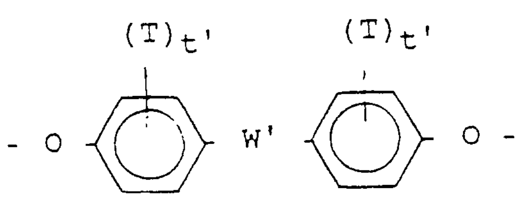

où W' a les significations données ci-dessus pour W, et T, dans les formules, est un radical alkyle en $C_1$-$C_6$, et t' vaut 0 ou 1, 2, 3 ou 4.

**11.** Alliage selon l'une ou plusieurs des revendications 8 à 10, caractérisé en ce que le polyestercarbonate est un copolymère de bisphénol A, de dichlorure de téréphtalyle, de dichlorure d'isophtalyle ou de mélanges de ces deux derniers et de phosgène.

**12.** Alliage selon l'une ou plusieurs des revendications 8 à 10, caractérisé en ce que le dihydroxyphénol est le bisphénol A, et les acides dicarboxyliques aromatiques sont l'acide téréphtalique ou l'acide isophtalique ou des mélanges de ces deux derniers.

**13.** Utilisation d'un alliage selon l'une ou plusieurs des revendications 1 à 12 pour fabriquer des objets moulés, des produits moulés par injection ou des produits extrudés, sous forme de fibres, de feuilles ou de tubes.